Europäisches Patentamt

(19) European Patent Office

Office européen des brevets

(11) Numéro de publication: **0 338 954**
**A1**

## (12) DEMANDE DE BREVET EUROPEEN

(21) Numéro de dépôt: **89420147.4**

(22) Date de dépôt: **21.04.89**

(51) Int. Cl.4: **G 03 B 27/32**
**G 03 D 13/00**

(30) Priorité: **22.04.88 FR 8805643**

(43) Date de publication de la demande:
**25.10.89 Bulletin 89/43**

(84) Etats contractants désignés:
**BE CH DE ES FR GB IT LI NL SE**

(71) Demandeur: **Crasnianski, Serge**
**11 chemin des Buisses**
**F-38240 Meylan (FR)**

(72) Inventeur: **Crasnianski, Serge**
**11 chemin des Buisses**
**F-38240 Meylan (FR)**

(74) Mandataire: **Laurent, Michel et al**
**Cabinet LAURENT 20, rue Louis Chirpaz B.P. 32**
**F-69131 Ecully Cédex (FR)**

(54) **Procédé et appareil pour reproduire un document par photographie.**

(57) Selon l'invention, pendant un cycle de reproduction, la feuille (4) est déplacée en continu selon une première vitesse, en étant balayée par un pinceau lumineux (8), puis l'extrémité libre de cette même feuille est reprise directement par des rouleaux (76 et 77) d'entrainement à l'entrée du premier bain (1). Le guide (78) et sa section transversale permettent d'absorber la courbure différentielle de la feuille, résultant des différences de vitesse de déplacement dans le bain (15) d'une part, et du faisceau lumineux (8) d'autre part. L'invention s'applique à la photocopie par procédé photographique.

FIG.3

Bundesdruckerei Berlin

## Description

### PROCEDE ET APPAREIL POUR REPRODUIRE UN DOCUMENT PAR PHOTOGRAPHIE.

L'invention concerne un procédé perfectionné pour reproduire un document par photographie ; elle concerne également un appareil du type en question, notamment un photocopieur couleur.

Dans le domaine de la photocopie couleur, il est bien connu de reproduire un document en enchaînant les unes derrière les autres différentes opérations nécessaires à la reproduction, à savoir principalement :
- obtenir une image optique du document ;
- impressionner une feuille continue d'un film photographique positif direct avec l'image optique du document ;
- découper la feuille selon un cliché ayant un format prédéterminé, par exemple A4 ;
- développer ce cliché par passage de celui-ci dans différents bains de traitement, puis séchage pour obtenir une reproduction selon le format prédéterminé.

Dans la suite du texte et dans les revendications, par "film photographique positif direct" ou par "bande photographique positivie directe", on entend tout film ou toute bande continue permettant d'obtenir directement un positif photographique comportant des colorants incorporés dans différentes couches d'émulsion et qui sont détruits pendant le développement proportionnellement à l'exposition.

Pour accomplir un cycle de reproduction selon ce procédé, il faut un certain temps relativement incompressible si l'on considère les temps réactionnels requis pour les opérations chimiques de développement dans les différents bains de traitement.

Par ailleurs, tout appareil pour la mise en oeuvre d'un tel procédé présente un encombrement relativement important a priori assez incompatible avec un usage sur une table ou sur un bureau.

Dans le document US-A-4 351 609, on a décrit un dispositif du type en question pour photographier des chèques dans lequel en continu, les document sont impressionnés sur un film continu puis développés, la différence de vitesse entre les deux phases étant absorbée en stockant le film continu impressionné sous forme de boucle libre. Une telle disposition ne permet malheureusement pas de réaliser des tirages feuille à feuille.

Dans le document EP-A-0 257 790, on a décrit un perfectionnement aux dispositifs photocopieurs en couleur permettant de réaliser des épreuves feuille à feuille en lumière blanche, et dans lequel on opère en discontinu, c'est-à-dire dans lequel le cliché subit un mouvement de va-et-vient devant la fenêtre d'exposition avant d'être développé. Il s'agit là d'une disposition complexe sur le plan mécanique, encombrante et dont la productivité est limitée du fait même du mouvement de va-et-vient.

L'invention pallie ces inconvénients. Elle vise un procédé perfectionné du type en question qui soit simplifié, économique, rapide et permette avec succès la production de photocopies couleur.

Ce procédé pour la reproduction d'un document par photographie, qui consiste :
. à balayer le document à reproduire au moyen d'une source lumineuse, de manière à obtenir une image optique de ce document ;
. puis, à projeter cette image optique sur une bande continue photographique positive directe se déplaçant en synchronisme avec la source lumineuse à une première vitesse, sous l'action de traction d'une première paire de rouleaux moteurs ;
. puis à découper la bande impressionnée par cisaillement pour obtenir un cliché ;
. introduire ce cliché dans une unité de développement comprenant une seconde paire de rouleaux moteurs d'introduction entraînés à une deuxième vitesse inférieure à la première vitesse et une succession de bacs de traitement puis enfin une section de séchage pour obtenir une reproduction du document d'un format prédéterminé ;
et dans lequel le cliché découpé est stocké provisoirement sous forme de boucle, de manière à absorber la différence entre la première et la deuxième vitesse, **se caractérise** en ce que pendant la phase de stockage provisoire :
- d'une part, on guide le cliché qui avance sous l'effet de la première paire de rouleaux moteurs ;
- et d'autre part, en ce que la longueur développée du trajet de ladite boucle guidée entre le point de cisaillement et la ligne de tangence de la deuxième paire de rouleaux est au plus égale à la longueur principale du format prédéterminé.

Pour les formats usuels, tels que le format européen A4 (210 x 297 mm), cette longueur développée L1 est égale à la longueur du format considéré 297 mm, diminuée de 4 à 12 mm. En effet, on a observé que pour ce format A4, si cette longueur développée était comprise entre 297 et 293 mm, la cisaille de découpe n'avait pas le temps d'agir efficacement à la volée. De même, on a observé que si cette longueur était inférieure à 285 mm, on avait un risque de bourrage au niveau de la ligne de tangence des rouleaux du deuxième train, ce qui entraîne une détérioration de l'émulsion du cliché à développer.

En d'autres termes, l'invention consiste en un procédé de photocopie couleur à partir d'un film ou d'une bande positive directe, dans lequel on stocke provisoirement le cliché entre l'unité d'exposition et l'unité de développement, à guider positivement ce cliché qui avance pour lui faire former une boucle symétrique de longueur fixe, de manière à ce que le cliché soit toujours entraîné positivement et guidé en permanence pendant toute la phase de stockage intermédiaire. Il s'ensuit que les durées de séjour dans les bacs de traitement sont ainsi constantes pour tous les points d'un même cliché, et d'un cliché à l'autre, ce que l'on ne savait pas obtenir jusqu'alors.

L'invention concerne également un appareil pour reproduire un document par photographie, comprenant :

- un plan d'exposition destiné à recevoir le document à reproduire ;
- une unité d'exposition comprenant une source lumineuse associée à un système optique, destinée à balayer le plan d'exposition, de manière à obtenir une image optique du document ;
- une unité d'alimentation comprenant une bande continue photographique positive directe, tirée en synchronisme avec l'organe de balayage par une première paire de rouleaux moteurs presseurs ;
- une cisaille de découpe disposée sous la première paire de rouleaux, de manière à ménager une surface d'exposition où l'image optique impressionne la bande continue qui défile sous l'effet de traction de la première paire de rouleaux à une première vitesse ;
- une unité de développement comprenant une seconde paire de rouleaux presseurs moteurs entraînés à une seconde vitesse inférieure à la première vitesse de la dite première paire de rouleaux moteurs, et une succession de bacs destinés à recevoir des bains de traitement munis d'organes moteurs pour faire avancer le cliché à développer dans les différents bacs de traitement à la seconde vitesse jusqu'à une section de séchage où l'on recueille la reproduction désirée, **caractérisé** en ce que entre la cisaille de découpe et l'unité de développement, il comporte également un guide en forme de boucle symétrique pour le cliché impressionné, dont la longueur de trajet développée entre le point de cisaillement et la ligne de tangence de la seconde paire de rouleaux moteurs est au plus égale à la longueur principale du format prédéterminé.

Avantageusement, en pratique :
- la cisaille présente juste en aval par rapport au sens de défilement de la feuille une paire de plaques de maintien qui débouche juste à l'entrée du guide en forme de boucle ;
- la ligne de tangence de la première et de la deuxième paire de rouleaux et le point d'appui du fil de la cisaille sur la bande qui défile sont contenus dans un même plan vertical ;
- le guide en forme de boucle est constitué de deux flasques parallèles sur les faces internes desquels sont ménagés des rails en forme de boucle symétrique, destinés d'une part à recevoir les bords du cliché qui avance et d'autre part à recevoir également une plaque qui épouse la forme des guides et contre laquelle s'appuie l'extrémité du cliché qui avance, l'ensemble comportant:
. une entretoise reliant les deux flasques, disposée à l'extérieur de la boucle au-dessus de la plaque et dans la zone de rapprochement des deux branches symétriques de la boucle,
. ainsi que deux autres rouleaux parallèles, fous en rotation et dont l'axe forme entretoise, disposés à l'intérieur de la boucle dans la portion la plus large ;
- la portion d'entrée de l'ensemble de guidage comporte également une seconde plaque parallèle à la première, disposée à l'intérieur de la boucle pour former guidage du cliché qui pénètre dans la boucle de stockage provisoire.

La manière dont l'invention peut être réalisée et les avantages qui en découlent ressortiront mieux de l'exemple de réalisation qui suit, à l'appui des figures annexées.

La figure 1 montre en vue perspective sommaire et en position ouverte un photocopieur couleur conforme à l'invention.

La figure 2 représente une vue schématique en coupe verticale et longitudinale de ce photocopieur.

La figure 3 représente, à échelle agrandie une vue en coupe transversale de la partie caractéristique de guidage de l'invention.

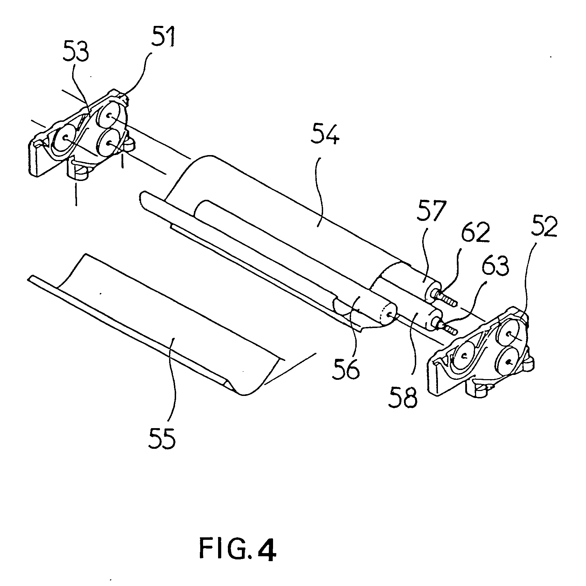

Enfin, la figure 4 est une représentation partielle, en perspective sommaire, de cet ensemble caractéristique de guidage.

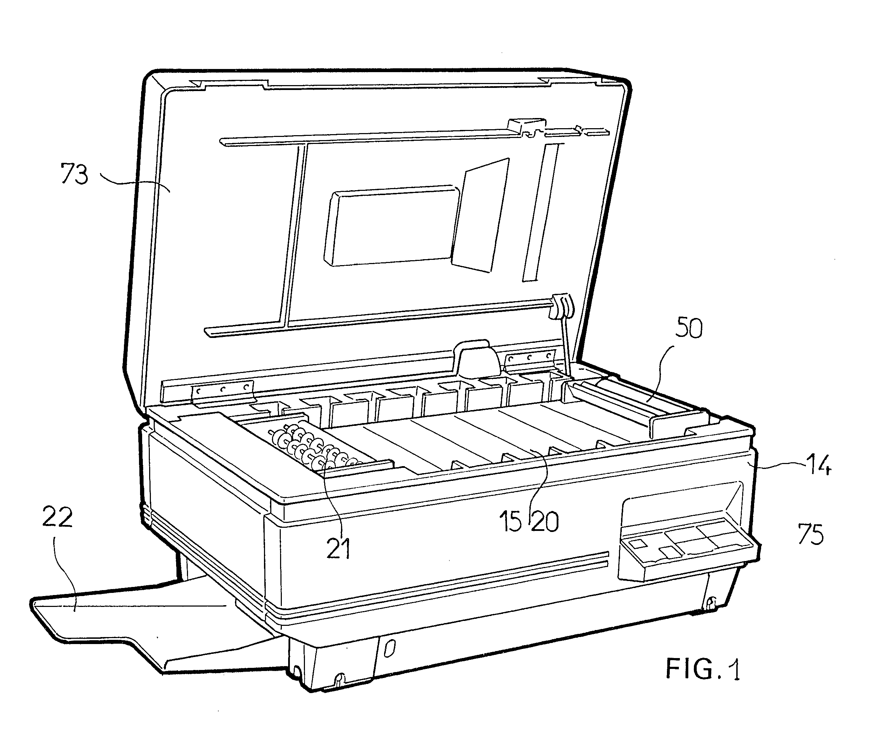

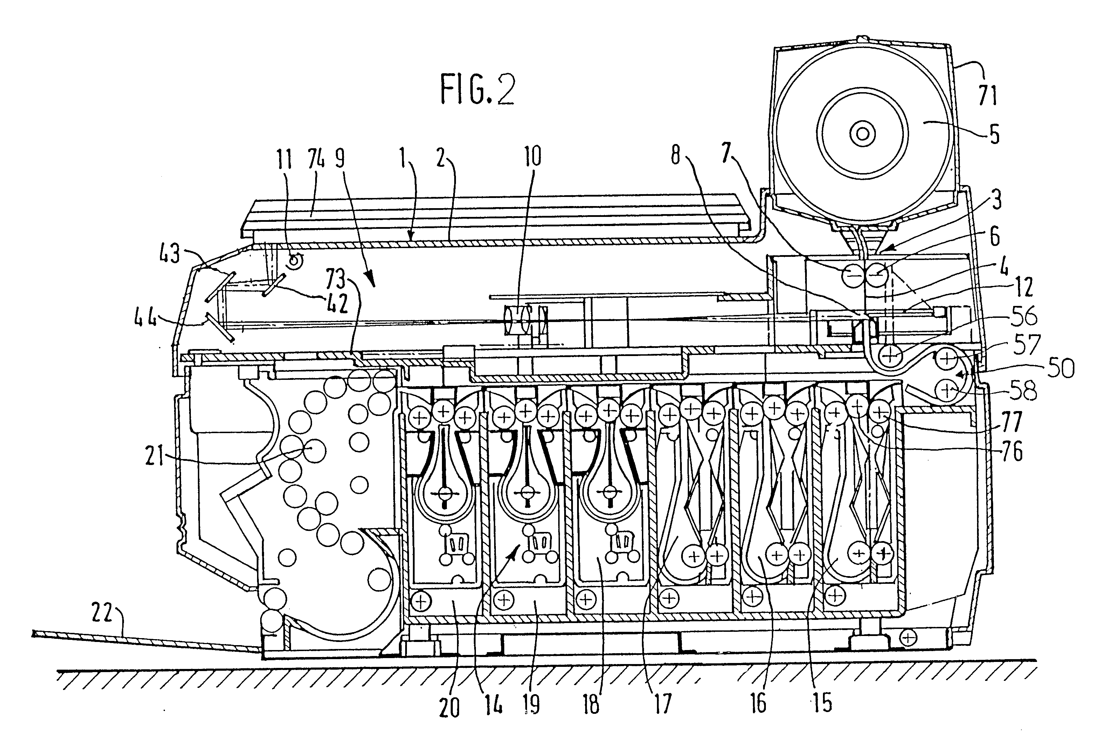

L'appareil de reproduction photographique photocopieur couleur conforme à l'invention comprend essentiellement (voir figures 1 et 2) trois unités principales respectivement d'exposition, d'alimentation et de développement.

L'unité d'exposition désignée par la référence générale (1) du document original à photocopier présente un plan horizontal d'exposition, tel qu'une vitre (2) transparente horizontale par rapport à laquelle est articulé un plateau (74) servant à presser le document original. Un système (9) de prise de vue en chambre noire est situé du côté interne de la vitre d'exposition (2) et comprend un objectif (10) sur le chemin optique duquel sont disposés, d'un côté le plan d'exposition matérialisé par la vitre (2), et de l'autre, une surface (8) à impressionner. De manière connue, la source lumineuse (11) balaie le document à reproduire et par un jeu de miroirs (42,43,44), l'image optique traverse l'objectif (10) pour être projetée en (8) sur la bande sensible (4).

L'unité d'alimentation désignée par la référence générale (3) comprend une bobine (5) de ce film photographique positif direct, c'est-à-dire directement impressionnable et développable, d'où est issue la feuille proprement dite (4). La bobine (5) est disposée dans un boitier (71) étanche à la lumière. L'ensemble comprend également deux galets (6) et (7) presseurs, moteurs et tournant en sens inverse, qui entraînent la feuille photographique (4) vers le bas selon une première vitesse. Cette unité d'alimentation (3) offre ainsi une surface (8) immatérielle, substantiellement plane et verticale, sur laquelle se projette l'image optique balayée. L'ensemble comporte également un moyen de découpe de cette feuille continue (4) selon un format prédéterminé, par exemple A4. De manière connue, il peut s'agir d'une cisaille (12), mobile horizontalement, adjacente à la surface (8) à impressionner et située au voisinage immédiat de l'axe optique (13). Cette cisaille (12) agit de manière connue à la volée à l'instar d'une guillotine.

L'unité de développement (14) comporte une succession de différents bacs destinés à recevoir des bains de traitement dans des cuves (15) à (20), respectivement (15) pour l'agent révélateur, (16) pour l'agent de blanchiement, (17) pour l'agent de fixation, (18 à 20) pour les liquides de lavage. L'ensemble comprend ensuite une enceinte (21) de séchage. On recueille dans le bac (22) la reproduction selon le format prédéterminé du document original disposé sur la vitre (2).

Des moyens classiques moteurs non représentés permettent de faire avancer le cliché (4) dans les différents bains (15) à (20) selon une deuxième vitesse nettement plus faible que la première ci-dessus mentionnée, par exemple dans un rapport de l'ordre de dix à un.

L'appareil comprend également de manière connue un plateau (73) articulé sur la cuve porteuse (14) pour permettre par basculement d'avoir accès aux différents bains de traitement (15) à (20). Le démontage de ce plateau (73) permet également d'avoir accès à la première paire de rouleaux moteurs (6,7) ainsi qu'à la cisaille horizontale (12) de découpe. Un clavier (75) situé sur 1 une des faces de l'appareil permet de commander et contrôler l'ensemble du fonctionnement de la machine.

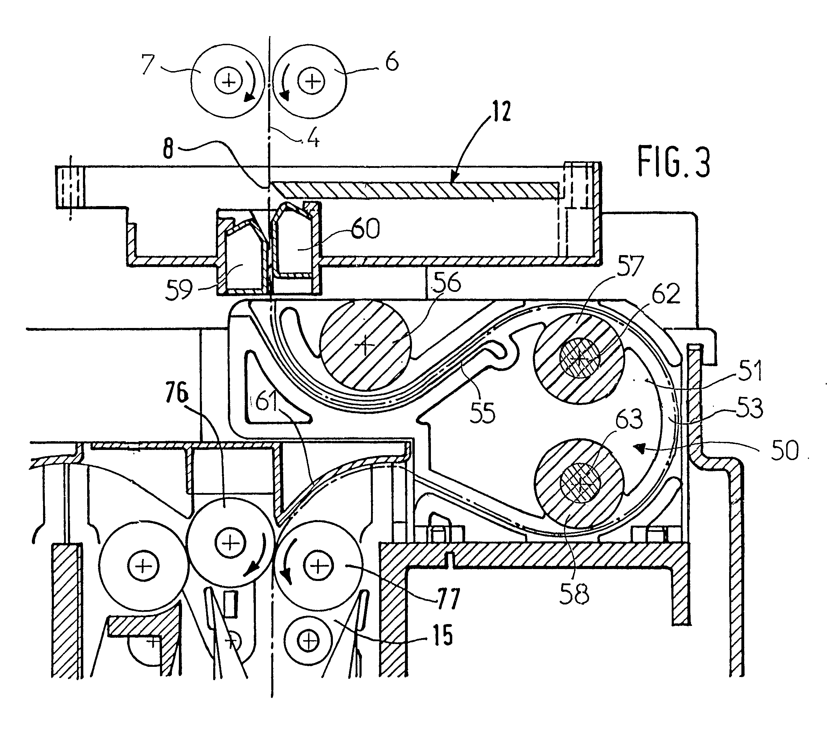

Selon une caractéristique essentielle de l'invention montrée aux figures 3 et 4, l'appareil comporte entre l'unité de développement (14) et l'unité d'alimentation (3) constituée principalement par le premier train de galets presseurs (6,7) et par la bobine (5) du film photographique positif direct, un guide de référence générale (50) en forme de boucle symétrique, destiné à assurer le guidage du cliché impressionné puis coupé, jusqu'à l'unité de développement (14). Comme déjà dit, le rôle essentiel de cette boucle (50) est le stockage intermédiaire et provisoire des clichés après leur impression mais avant leur développement, afin notamment d'obtenir des durées de traitement notamment de développement constantes pour l'ensemble de tous les points d'un même cliché, et d'un cliché à l'autre.

Comme on peut le voir sur les figures 3 et 4, cette boucle (50) est symétrique par rapport à un plan horizontal, orthogonal au plan vertical de déplacement du cliché (4) contenant d'une part, la ligne de tangence des galets (6) et (7) et des rouleaux (76) et (77) d'introduction du cliché impressionné dans les différents bacs de traitement en vue du développement. Cette boucle est disposée dans le volume de l'appareil situé entre la cisaille (12) et les rouleaux (76) et (77), et plus précisément de manière adjacente et latérale, immédiatement au-dessus du premier bain (15) de révélateur.

Cette boucle est constituée par deux flasques latéraux parallèles (51) et (52), sur les faces internes desquelles sont ménagés des rails (53) en forme de boucles symétriques. Ces rails sont destinés à recevoir les bords du cliché qui avancent. Ils sont en outre destinés à recevoir une plaque également en forme de boucle (54) réalisés en acier inoxydable, dont le rôle essentiel est d'assurer le guidage du cliché pendant le stockage provisoire. Ces rails (53) sont également destinés à recevoir une seconde plaque parallèle à la première et disposée à l'intérieur de la boucle pour former guidage du cliché lorsque celui-ci pénètre dans la boucle de stockage provisoire. Cette boucle de guidage complémentaire (55) ne s'étend en fait que sur partie seulement de la totalité de la boucle (50). Elle est également réalisée en acier inoxydable.

De manière complémentaire, les flasques sont maintenus parallèles entre eux au moyen d'une entretoise (56) située au-dessus de la boucle (50) et au niveau de la zone de rapprochement des deux branches constitutives de la dite boucle. De même, à l'intérieur de ladite boucle (50), les deux flasques sont maintenus solidaires et parallèles l'un par rapport à l'autre au moyen de deux rouleaux fous en rotation (57) et (58), dont les axes de rotation respectifs (62) et (63) forment également entretoises. Les deux rouleaux (57) et (58) sont situés dans un même plan vertical au niveau de la portion la plus large de la boucle (50).

Comme on peut le voir sur la figure 3, les deux plaques (54) et (55) ne sont pas rigoureusement parallèles à l'entrée de la boucle de stockage provisoire (50). En effet, elles forment un léger entonnoir afin de permettre une pénétration plus aisée du cliché après impression. De fait, l'introduction du cliché impressionné est facilitée par la présence juste en amont de l'entrée de la boucle de stockage provisoire (50) et juste en aval de la cisaille de découpe (12), d'une paire de plaques de maintien (59,60) parallèles.

De même, juste en aval de la sortie de la boucle de stockage provisoire (50), le bâti comporte un déflecteur (61) situé juste à l'entrée du premier bain de traitement (15). Ce déflecteur (61) dont la forme correspond à celle d'un secteur cylindrique, débouche juste au niveau des rouleaux (76) et (77) d'introduction du cliché dans les différents bains de développement et notamment le bain (15).

Selon une caractéristique fondamentale de la présente invention, la longueur développée de la boucle de stockage provisoire (50) correspond au plus à la dimension principale du format du cliché désiré. En l'occurrence, dans un format type A4, la longueur de la boucle développée a une dimension de 290 mm. Par longueur de boucle développée, on entend la distance séparant le fil de la cisaille (12) et la ligne de tangence des deux rouleaux d'introduction (76) et (77). De plus, l'écartement séparant les plaques de guidage (54) et (55), en l'occurrence environ 1,5 mm, outre son rôle évident de définir un passage de guidage pour le papier impressionné (4), est également destiné à absorber la différence entre cette longueur développée et la dimension réelle du format, en l'occurrence 297 mm.

De la sorte, compte tenu de la structure de l'appareil conforme à l'invention, le cliché est tout d'abord poussé à une première vitesse par la paire de galets (6,7) tout d'abord entre les deux plaques de maintien (59,60), puis dans la boucle de stockage provisoire (50), jusqu'à ce que ledit cliché atteigne la ligne de tangence des rouleaux (76) et (77), qui eux tournent à une vitesse environ dix fois inférieure à celle des galets (6) et (7), ledit cliché étant alors tracté au moyen de cesdits rouleaux, la différence de vitesse entre les deux jeux de rouleaux respectivement (6,7) et (76,77) étant compensés jusqu'à la découpe du cliché après la fin de l'impression de ce dernier par l'écartement des deux plaques respectivement (54,55) constitutives de la boucle de stockage provisoire, permettant un jeu correspondant à la différence entre la longueur prinicpale du format considéré et la longueur développée de la boucle.

De la sorte, la différence de vitesse entre les galets (6,7) et les rouleaux d introduction (76,77) est compensée, permettant et c'était l'un des principaux buts recherchés par la présente invention, une durée de traitement des clichés impressionnés égale pour chacun d'entre eux.

Les rouleaux (57) et (58) comme déjà dit, sont montés fous en rotation afin, lorsque le cliché est tracté par les rouleaux (76,77) d'introduction dans le bac de traitement (15), de ne pas altérer l'émulsion recouvrant le cliché impressionné.

Un cycle de reproduction conforme à la présente invention comporte les étapes ou opérations suivantes :

- à partir de la bobine (5) et au moyen des galets d'entraînement (6) et (7), la feuille (4) est déplacée en continu selon une première vitesse, par exemple de 75 mm/seconde vers le premier bac (15) de traitement, en passant par la boucle de stockage provisoire (50) ;

- simultanément à ce déplacement, le pinceau lumineux émis par la source (11) balaie le document présent sur la vitre (2), selon la même première vitesse, et selon l'une des dimensions dudit document ;

- l'image fixe du pinceau est projetée sur la zone d'impression (8) définie précédemment de la feuille (4) en mouvement ;

- pendant la première étape, et après stockage provisoire dans la boucle (50), l'extrémité libre de la feuille en mouvement est reprise directement par les rouleaux (76) et (77), puis déplacée en continu dans le premier bain (15) selon la deuxième vitesse plus faible que la première, par exemple de 7,5 mm/seconde ; cette vitesse, qui est la même de l'entrée du premier bain (15) jusqu'à la sortie de l'enceinte de séchage (21), correspond au temps réactionnel requis pour une réaction complète de différents agents chimiques et notamment de l'agent révélateur ; la longueur développée de la boucle de stockage provisoire (50) sur le trajet de la feuille (4) en mouvement entre la zone de cisaillement (12) et la zone d'introduction dans le bain révélateur (15), c'est-à-dire la ligne de tangence des rouleaux d'introduction (76) et (77) de l'extrémité libre de la feuille (4), permet de loger la courbure différentielle du papier résultant de la différence entre les première et deuxième vitesses de translation ;

- les galets (6,7) sont arrêtés, impliquant la fin du déplacement de la feuille (4) selon la première vitesse ; le balayage du pinceau lumineux émis par la source (11) est également stoppé, à l'extrémité du document original à reproduire ; mais la feuille (4) poursuit son déplacement dans le premier bain (15) à l'aide des rouleaux d'introduction (76,77) ;

- pendant l'arrêt de l'étape précédente, la feuille (4) est découpée selon le cliché ou format prédéterminé par la cisaille (12) ;

- la feuille ainsi découpée au format prédéterminé pénètre alors dans le premier bain (15) et poursuit ensuite son chemin selon la deuxième vitesse dans les autres bacs successifs jusqu'à sa sortie de l'enceinte de séchage (21).

Il ressort de la présente invention différents avantages que les procédés et autres dispositifs connus à ce jour ne permettaient pas d'obtenir. On peut notamment citer la possibilité de pouvoir traiter tous les points d'un cliché selon la même durée dans les différents bains de traitement, ce qui est fondamental pour obtenir des clichés reproductibles dans des conditions fixées. De même, ces conditions de traitement sont exactement reproductibles d'un cliché à l'autre, à la variation des constituants chimiques de traitement près.

## Revendications

1/ Procédé pour la reproduction d'un document par photographie, qui consiste :

. à balayer le document à reproduire au moyen d'une source lumineuse, de manière à obtenir une image optique de ce document ;

. puis, à projeter cette image optique sur une bande continue photographique positive directe se déplaçant en synchronisme avec la source lumineuse à une première vitesse, sous l'action de traction d'une première paire de rouleaux moteurs ;

. puis à découper la bande impressionnée par cisaillement pour obtenir un cliché ;

. introduire ce cliché dans une unité de développement comprenant une seconde paire de rouleaux moteurs d'introduction entraînés à une deuxième vitesse inférieure à la première vitesse et une succession de bacs de traitement puis enfin une section de séchage pour obtenir une reproduction du document d'un format prédéterminé ;

et dans lequel le cliché découpé est stocké provisoirement sous forme de boucle, de manière à absorber la différence entre la première et la deuxième vitesse, **caractérisé** en ce que pendant la phase de stockage provisoire :

- d'une part, on guide le cliché qui avance sous l'effet de la première paire de rouleaux moteurs ;

- et d'autre part, en ce que la longueur développée du trajet de ladite boucle guidée entre le point de cisaillement et la ligne de tangence de la deuxième paire de rouleaux est au plus égale à la longueur principale du format prédéterminé.

2/ Appareil pour reproduire un document par photographie selon le procédé décrit dans la revendication 1, comprenant :

- un plan d'exposition (2) destiné à recevoir le document à reproduire ;

- une unité d'exposition (9) comprenant une source lumineuse (11) associée à un système optique (10,42,43, 44), destinée à balayer le plan d'exposition, de manière à obtenir une image optique (8) du document ;

- une unité d'alimentation (3) comprenant une bande continue photographique positive directe (4), tirée en synchronisme avec l'organe de balayage (11,42,43,44) de l'unité d'exposition (9) par une première paire de rouleaux moteurs presseurs (6,7) ;

- une cisaille de découpe (12) disposée sous la première paire de rouleaux (6,7), de manière à ménager une surface d'exposition (8) où l'image optique impressionne la bande continue (4) qui défile sous l'effet de traction de la première paire de rouleaux à une première vitesse ;

- une unité de développement (14) comprenant une seconde paire de rouleaux presseurs (76,77) moteurs entraînés à une seconde vitesse inférieure à la première vitesse de la première paire de rouleaux moteurs (6,7) et une succession de bacs (15-20) destinés à recevoir des bains de traitement et des organes moteurs pour faire avancer le cliché à développer dans les différents bacs de traitement à la seconde vitesse jusqu'à une section de séchage (21) où l'on receuille la reproduction désirée,

**caractérisé** en ce que entre la cisaille de découpe et l'unité de développement (14), il comporte également un guide (50) en forme de boucle symétrique pour le cliché coupé (4), dont la longueur de trajet développée entre le point de cisaillement et le point de tangence de la seconde paire de rouleaux moteurs (76,77) est au plus égale à la longueur principale du format prédéterminé.

3/ Appareil selon la revendication 2, caractérisé en ce que la cisaille (12) présente juste en aval par rapport au sens de défilement de la feuille (4) une paire de plaques de maintien (59,60) qui débouche juste à l'entrée du guide en forme de boucle (50).

4/ Appareil selon l'une des revendications 2 et 3, caractérisé en ce que la ligne de tangence de la première (6,7) et de la deuxième paire (76,77) de rouleaux et le point d'appui du fil de la cisaille (12) sur la bande qui défile, sont contenus dans un même plan vertical.

5/ Appareil selon l'une des revendications 2 à 4, caractérisé en ce que le guide en forme de boucle (50) est constitué de deux flasques parallèles (51,52) sur les faces internes desquelles sont ménagés des rails (53) en forme de boucle symétrique, destinées à recevoir d'une part les bords du cliché (4) qui avance, et d'autre part une plaque (54) qui épouse la forme des guides et contre laquelle s'appuie l'extrémité du cliché qui avance, l'ensemble comportant en outre :

- une entretoise (56) reliant les deux flasques (51,52), disposée à l'extérieur de la boucle au-dessus de la plaque (54) et dans la zone de rapprochement des deux branches symétriques de la boucle,
- deux rouleaux parallèles, fous en rotation et dont les axes respectifs (62,63) forment entretoises, les dits rouleaux étant disposés à l'intérieur de la boucle dans la portion la plus large.

6/ Appareil selon l'une des revendications 2 à 5, caractérisé en ce que la portion d'entrée de l'ensemble de guidage comporte également une seconde plaque (55) parallèle à la première, disposée à l'intérieur de la boucle (50) pour former guidage du cliché (4) qui pénètre dans la boucle de stockage provisoire.

FIG. 1

EP 0 338 954 A1

FIG.2

EP 0 338 954 A1

FIG.3

EP 0 338 954 A1

# FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | US-A-4 351 609 (S. INOUE et al.)<br>* Colonne 3, lignes 30-37,49-68;<br>colonne 4, lignes 1-3,53-60; figure 1 *<br>--- | 1 | G 03 B 27/32<br>G 03 D 13/00 |
| A | PATENT ABSTRACTS OF JAPAN, vol. 5, no. 96 (P-67)[768], 23 juin 1981; & JP-A-56 40 819 (MOCHIZUKI SHIYOUTEN K.K.) 17-04-1981<br>--- | 1 | |
| D,A | EP-A-0 257 790 (KONISHIROKU PHOTO INDUSTRY)<br>* Pages 1,2; figure 1 *<br>----- | 1 | |

**DOMAINES TECHNIQUES RECHERCHES (Int. Cl.4)**

G 03 B 27/32
G 03 D 13/00
G 03 D 15/02
G 03 B 27/48
G 03 B 27/50

Le présent rapport a été établi pour toutes les revendications

| Lieu de la recherche | Date d'achèvement de la recherche | Examinateur |
|---|---|---|
| LA HAYE | 11-07-1989 | BOEYKENS J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)